# EUROPEAN PATENT APPLICATION

(11) **EP 1 209 901 A1**
(43) Date of publication of application: **29.05.2002**
(21) Application number: 00125534.8
(22) Date of filing: 22.11.2000
(51) Int. Cl.: H04N 3/15, H04N 7/14

(54) **Image pick-up and display apparatus**

(71) Applicant: DEUTSCHE THOMSON-BRANDT GMBH, 78048 Villingen-Schwenningen (DE)
(72) Inventor: Heighway, Tim, Northampton NN3 6BA (GB); Kochale, Axel, 31832 Springe (DE); Winter, Marco, 30173 Hannover (DE); Adolph, Dirk, 30952 Ronnenberg (DE)
(74) Representative: Rossmanith, Manfred, Dr.

(57) **Abstract**

In such an apparatus including a large display area and a comparatively small camera area the camera produces a picture with a wrong perspective if the object to be picked-up moves to a border of the display area, for example a side view instead of a front view of a speaker directly looking to the display area.

It is an object to provide such an apparatus avoiding said drawback and enabling pick-up of the object by the camera area with correct perspective wherever the object is situated in front of the display area.

The camera area and the display area are positioned one behind the other and have the same dimensions. Particularly a camera plate (6) and a display plate (7) are displaced in direction of the optical axis one plate including translucent areas enabling transmission of light from the object (12) to be picked-up to the camera plate (6) or of backlight (10) to a display plate (7) including LCD cells.

An advantageous field of application is teleconferencing or videophone equipments working with large display screens.

## Description

The present invention relates to an image pick-up and display apparatus according to the preamble of claim 1.

A conventional apparatus of this kind comprises a video camera and may be used in teleconferencing or television telephone systems, generally called videophone. In such a system video and audio links are established between calling and called persons or parties. Normally a person is situated before a camera objective in order to transmit a picture of him to a remote person or counterpart for establishing a conversation between said persons. Additionally, the person situated before the camera objective generally likes to see a picture of his counterpart or to monitor the picture sent from him to its remote counterpart. To achieve this, a display device is arranged above, underneath or beside the camera fed by the video signal sent to his counterpart or received from his counterpart. In fact such equipment works like an "electronic mirror" as the person can see itself from the camera side. Usually a conventional monitor is used as display. However, the display must be displaced with respect to the objective of the camera. If the person looks to the display the eye-to-eye contact with the remote counterpart gets lost.

The US 5 159 445 discloses an arrangement comprising an LCD-display and a camera located in the center of the display and behind of it. In this arrangement the area of the camera is substantially smaller than the area of the display. It is a property of this arrangement that if a speaker moves in front of the display area and leaves the camera area the camera sees the speaker from a wrong perspective, for example not a front view but a side view of the head of the speaker.

It is therefore desirable to provide an apparatus of the described type in such a way that the camera area always picks-up a picture of an object like a person without wrong perspective wherever the object is situated in front of the display area.

According to the invention an image pick-up and display apparatus is provided, comprising optical pick-up means and display means respectively associated with light sensitive elements defining a light sensitive pick-up area and with light emitting elements defining a display area. Both types of elements are arranged within an active area of the display in such a way that both the pick-up area and the display area are enabled to occupy substantially the entire active area.

Hence, it is a main aspect of the invention that the pick-up or camera area and the display area are positioned one behind the other and have substantially the same dimensions. If the speaker is situated in front of the display area and even if he moves to its border then he remains situated also in front of the camera area so that a display in a wrong perspective is avoided.

According to one embodiment of the invention a first group of pixels of the active area is associated to the pick-up area and a second group of pixels of the active area is associated to the display area in form of a spatial multiplexing. According to another embodiment of the invention the pixels of the active area are time-sequentially alternately associated either to the pick-up area or to the display area in form of a time multiplexing.

In principle the two groups of pixels of the pick-up area and of the display area may be arranged in the same plane, for example a single plate or in two planes lying one behind the other, for example in two separate plates displaced with respect to each other in direction of the optical axis. In the case of two plates positioned one behind the other preferably one of the plates includes translucent or transparent elements permitting the passage of incident light through said plate to the other plate. Preferably the translucent elements have the size of one or several pixels and are controlled to be alternately translucent or not translucent.

According to a further embodiment of the invention one of the plates is periodically shifted by one or several lines with respect to the other plate within the plane of the plate, i.e. in radial direction perpendicular to the optical axis of the apparatus. This constitutes a spatial multiplexing between camera mode and display mode with additional means for reducing loss of vertical resolution principally caused by spatial multiplexing.

The light sensitive elements and the light emitting elements may be arranged side by side within a single plate. Preferably the light sensitive elements and the light emitting elements are arranged in an interspersed form in a single plate in addition to the light sensitive elements and the light emitting elements translucent or diffusive elements are arranged in the plate interspersed between said light sensitive and said light translucent elements. Said translucent or diffuse elements are provided for enabling the transmission of light between the camera cells and display cells, that means light from the object through the display plate to the camera plate or any backlight through the camera plate to the display plate if said plate needs light for display like LCD cells. In such an arrangement additionally to the light sensitive elements and the light emitting elements translucent or diffusive elements are arranged in the plate interspersed between said light sensitive and said light translucent elements.

According to another embodiment of the invention a light-emitting sheet is positioned between the two plates fed at its border by light from a light source like a lamp and emitting backlight to the plate with the display area. Therein in order to switch off the light transmitted to the plate with the display area the sheet is controlled into a flat and even shape whereas in order to switch on the light transmitted to the plate with the display area the sheet is controlled into a curved or spherical form. Then said light emitting sheet operates like an reflector or an optical wave guide being switched on and off with respect to the light transmitted to the plate with the display area.

According to a further development of the invention a color filter sheet is positioned between the two plates having elements transmitting only light of one of the primary colors R, G, B so that light passing through one element is directed to a camera or display cell adapted only for light with said primary color. Such an arrangement enables the pick-up and display of colored images.

According to another further development of the invention one or both of the areas is covered with a piezo-polymeric foil acting as a loudspeaker or a microphone for the apparatus. In such a structure advantageously picture and sound originate from the same area thereby improving impression of sound and furthermore enabling that no space at the cabinet of the apparatus is needed for positioning a loudspeaker or a microphone.

According to a further embodiment of the invention masking cells are positioned between the pick-up area and the display area said cells being not-transparent during display mode for masking light and preventing that light for display impinges on the camera cells.

Preferably the camera cells are CCD (charge-coupled device) cells whereas the display cells are LCD (liquid crystal display) cells needing external backlight for producing a visible picture. However, display cells also may be active light emitting cells like LED's (light emitting diode) which themselves produce light not needing external backlight for producing a visible picture, for example so-called organic cells.

In the following the invention will be further described by way of some examples illustrated in the drawing. Within the drawing
Fig. 1 is a schematic presentation for showing the principle of the invention,
Fig. 2 shows an implementation for the arrangement of Fig.1,
Fig. 3 shows an embodiment according to Fig. 2 working with a spatial multiplexing between camera cells and display cells,
Fig. 4 is an arrangement of camera cells and display cells with additional means for feeding external backlight to the display cells,
Fig. 5 shows an embodiment adapted for pick-up and display of colored pictures,
Fig. 6 shows a screen for pick-up and display of colored pictures in form of a honeycomb structure,
Fig. 7 shows an arrangement of camera cells and display cells together with additional masking cells for masking camera cells from incident light,
Fig. 8 shows the arrangement of Fig. 1 in more detail,
Fig. 9 shows a practical implementation of a camera cell matrix,
Fig. 10 shows a further arrangement of a camera plate, a display plate and additional means for guiding the light and
Fig. 11 shows a front view of a screen for pick-up and display of colored images.

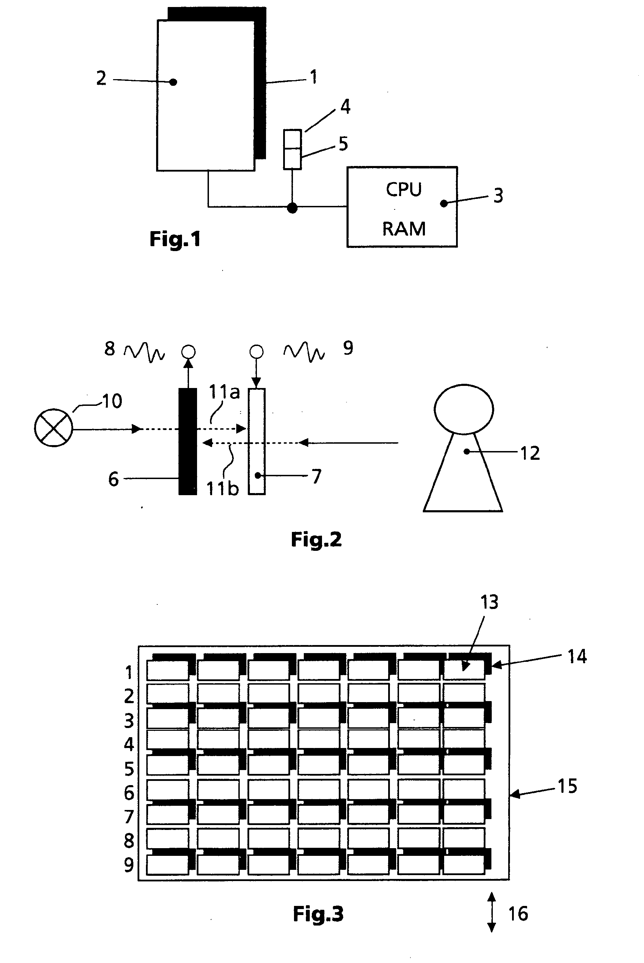

Fig. 1 schematically shows the principle of the invention. A pick-up or camera area 1 including light sensitive elements for converting a focused picture into a video signal and a display area 2 for converting a supplied video signal into a visible picture are arranged one behind the other such that the display area 2 covers the front side of the camera area. Furthermore, the two areas 1 and 2 have the same size, i.e. equal breadth and equal height.

If a speaker looks towards the arrangement the pick-up area 1 and the display area lie in the same direction. Therefore, he does not need to turn his head for alternately looking directly to the pick-up area and to directly view the picture on the display area, which might be the picture of his partner or a picture of himself in the sense of an "electronic mirror" in a videophone system. If the display area 2 is a rather broad area and the speaker moves along the area, for example to the left or right border, then the pick-up area does not pick-up his image from a wrong perspective, for example seeing its head from the side, but always establishes a front view of the speaker in the same way as if the speaker was in the middle of the display area 2.

The arrangement is controlled by a controller 3 comprising a central processing unit (CPU) and a memory (RAM). Furthermore, a loudspeaker 4 and a microphone 5 are associated to the areas 1, 2 to enable conversations. The loudspeaker 4 and 5 can be conventional components. But in the present embodiment of the invention there are two components realized by a piezo-polymeric foil on the area 1 or 2. The piezo-polymeric foil acts as an electro-mechanical transducer for transforming electric signals into sound waves and vice versa. In this case the area 2 establishes a "talking mirror" without needing a separate loudspeaker. Such an arrangement is described in more detail in the PCT-document WO 90/03711.

Fig. 2 shows an arrangement working according to the principle described in Fig. 1. A camera plate 6 including CCD elements providing a video signal 8 and a display plate 7 including LCD elements fed by a video signal 9 are arranged one behind the other and have the same dimensions like in Fig. 1. A backlight 10 necessary for operation of the LCD elements in plate 7 passes through the camera plate 6 via translucent areas within said plate thus reaching display plate 7 as indicated by a dashed line 11a. In a similar way light from an object 12 to be picked-up, e.g. a speaker, passes through translucent areas of the display plate 7 thus reaching light sensitive cells within camera plate 6 for producing the video signal 8 representing the object 12 as it is indicated at 11b.

Fig. 3 shows an array of display cells 13 arranged in nine lines and eight columns. The display cells 13 of lines 1, 3, 5, 7 and 9 are translucent and behind each of said cells a camera cell 14 is provided. All camera cells are positioned on a movable camera plate 15. Light coming from an object passes through display cells of lines 1, 3, 5, 7 and 9, and impinges on camera cells 14 for being converted into a video signal. Display cells 13 of lines 1, 3, 5, 7 and 9 are ineffective for display and do not create a pixel of the visible picture. Display cells 13 of lines 2, 4, 6 and 8 are not translucent, but each of them forms a pixel for a visible picture according to a supplied video signal. Therefore light from the object cannot pass through said cells to camera plate 15 and therefore camera plate 15 does not carry camera cells behind said cells. In fact this is an spatial multiplexing between effective display cells and effective camera cells. As can be seen there are no camera cells for lines 2, 4, 6 and 8, so that the vertical spatial resolution is decreased. In order to avoid said decrease in vertical solution camera plate 15 is periodically shifted in direction of arrow 16 by the breadth of one line so that camera cells 14 alternately lie in lines 1, 3, 5, 7 and 9, and lines 2, 4, 6 and 8. Over one period there are camera cells in every line and the decrease of spatial resolution is at least partially compensated. The shifting of the camera plate is achieved by a mechanical arrangement driven by a motor. Appropriate arrangements are known in the art and are therefore not shown in Fig. 3.

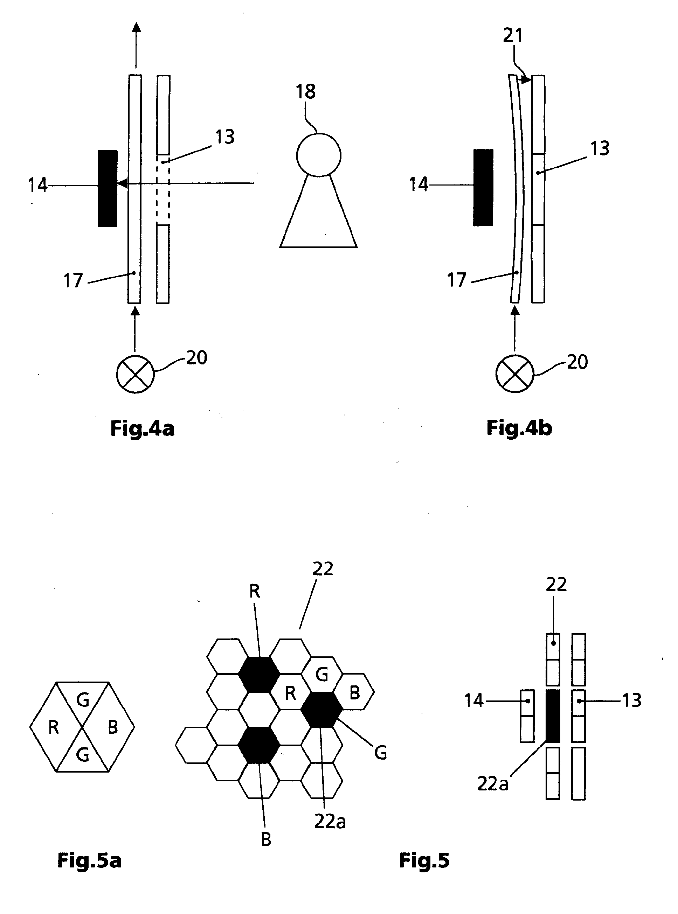

Figures 4a and 4b show an arrangement of a camera cell 14 and a display cell 13 wherein alternately the camera cell and the display cell are effective. In Fig. 4a a light-emitting sheet 17 is positioned between camera cell 14 and display cell 13. Display cell 13 is switched off in order to be translucent and to not form a visible pixel of a picture. Therefore, light 18 from an object can pass to camera cell 14. As there is no display by cell 13, a light source 20 needed for illuminating an LCD display is switched off. Switching the light on and off can also be achieved by forming sheet 17 into a flat or even shape as indicated in Fig. 4a. Then light enters into the lower edge of sheet 17 and nearly completely leaves sheet 17 at the upper edge nearly no light being directed perpendicular to sheet 17 in direction to display cell 13. In fact in this case display cell 13 is translucent and ineffective for display and camera cell 14 is effective. Different shapes of sheet 17 are achieved by mounting the sheet 17 in a fixture, which is apt for deforming the sheet. The fixture is a conventional mechanical arrangement and is therefore not shown in Figs. 4a and 4b.

In Fig. 4b display cell 13 is switched on to produce a pixel of a visible picture. Lamp 20 is switched on. Light emitting sheet 17 is controlled to adapt a curved shape as shown in Fig. 4b. Now the light at least partially leaves sheet 17 and is directed to display cell 13 as indicated by small arrow 21 supplying the backlight required for an LCD display like in Fig. 2. In fact now display cell 13 is effective for creating a pixel of a visible picture whereas camera cell 14 is inactive because no useful light from the object can pass through active display cell 13. The lamp 20 may be omitted if light-emitting sheet 17 is a self-shining or light-emitting sheet producing light, which is directed to display cells 13.

Fig. 5 again shows a camera cell 14 and a related display cell 13 similar to Fig. 4a, 4b. In this embodiment a color filter sheet 22 is provided between camera cells and display cells for pick-up or display of colored images. Sheet 22 has a honeycomb structure with dots for primary colors red (R), green (G), blue (B). Only light of one primary color passes through each field, as shown in the configuration. In the camera mode display cell 13 is controlled to be translucent. Cell 22a is transparent for green light so that only green light impinges on camera cell 14 adapted for green light. Fig. 5a shows the arrangement of color fields for R, G, B of color filter sheet 22 for both camera cells and display cells. During display mode the filter sheet 22 may function as a light-emitting sheet similar to sheet 17 in Fig. 4 for directing light to the display cells if these require illumination like cells of an LCD screen. In fact, the cells of sheet 22 can alternately perform different functions. They can be controlled translucent for enabling passage of light of one of primary colors R, G, B from the object through translucent display cells 13 to camera cells 14. They can be controlled diffusive for transmitting backlight from an external light source to display cells 13 if these need light for display. They can be controlled not transparent so that they can mask light from display cells 13 from camera cells 14 during display mode for avoiding overload of the camera cells.

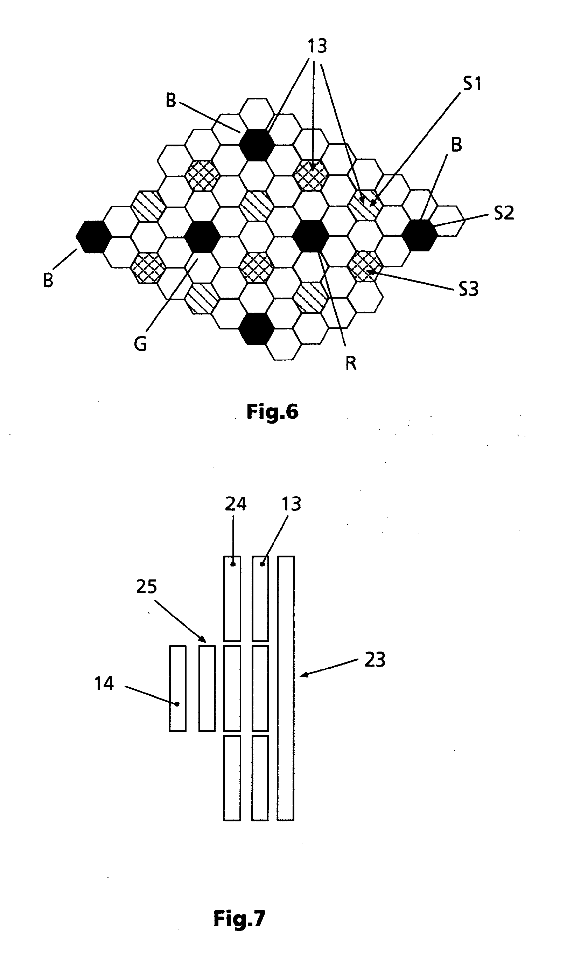

Fig. 6 shows a part of a honeycomb structure of display cells 13 with corresponding camera cells beneath. Each field of the structure corresponds to one of the colors red R, green G and blue B in the configuration shown. There are three switching cycles S1, S2, S3 for the display cells indicated by different patterns within the fields. During each cycle cells for R, G, B are scanned in a sequence R, G, B, R, G... In the present embodiment the display cells are both active for displaying a pixel in the respective primary color and simultaneously as a light filter of the same primary color for the camera cell below. During each of the three switching cycles S1, S2, S3 only one third of the cells is active. Thereby it is achieved that not too many cells are switched, as the number of cells is very high for achieving good spatial resolution in view of the low distance from the viewer to the screen. If the light emitted from the display cells dominates the light received by the camera cells, it is also possible to implement a time multiplexing between the display mode and the camera mode.

Fig. 7 shows a glass carrier 23 for protecting camera and display cells. Behind the glass carrier 23 display cells 13 are positioned in the manner described. Behind the display cells 13 a light-emitting sheet 24 is positioned similar to sheet 17 in Fig. 4. Behind the light emitting sheet 24 masking cells 25 are positioned in front of each camera cell 14. Masking cells 25 do not transmit light but mask any light. Thereby it is prevented that light emitted by sheet 24 undesirably impinges on camera cells 14 during display mode. Thereby signal overflow and/or distortion inside the camera cell 14 during the display mode is avoided. In the camera mode the masking cell 25 is controlled translucent so that light from the object can pass through glass carrier 23, translucent display cell 13, translucent cell of light emitting sheet 24 and translucent masking cell 25 and finally impinges on camera cell 14.

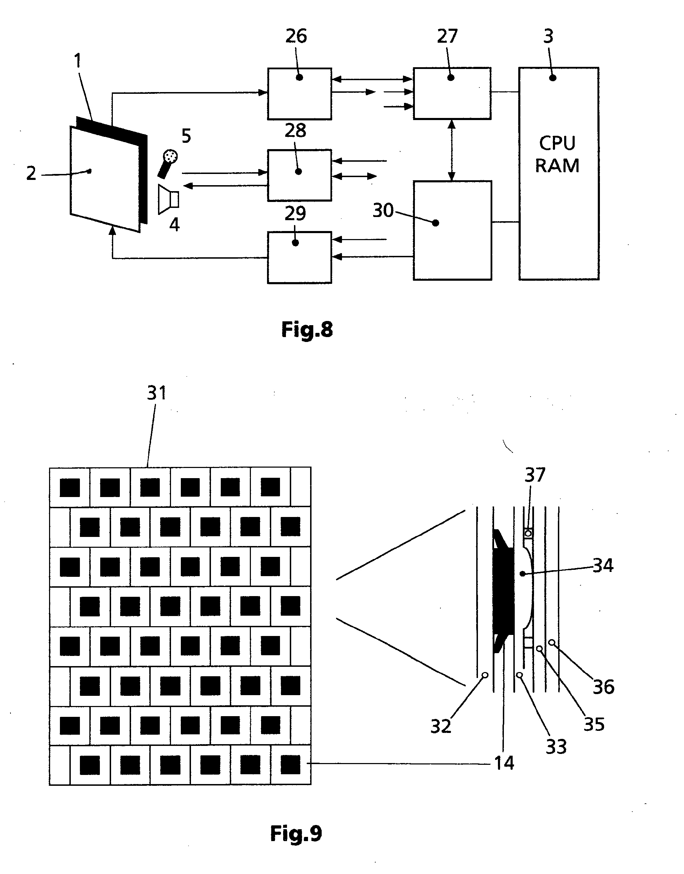

Fig. 8 shows the equipment of Fig. 1 in more detail. In addition to Fig. 1 there are shown a camera control unit 26, a system control unit 27, an audio control unit 28, a display control unit 29 and a memory unit 30. The equipment shown may be connected to an internet-terminal, for example.

Fig. 9 shows a camera cell matrix 31. One cell 14 of the matrix 31 is extracted and depicted in an enlarged scale on the right of Fig. 9. The camera cells are positioned on a carrier board 32. A micro-optic sheet 33 including one microlense 34 for each camera cell 14 for appropriate focusing of light from the object on to the camera cells 14 is arranged in front of the camera cells. A masking layer 35 and a display layer 36 are provided in front of the sheet 33. Distance keeping elements 37 maintains a predetermined distance between micro-optic sheet 33 and masking layer 35.

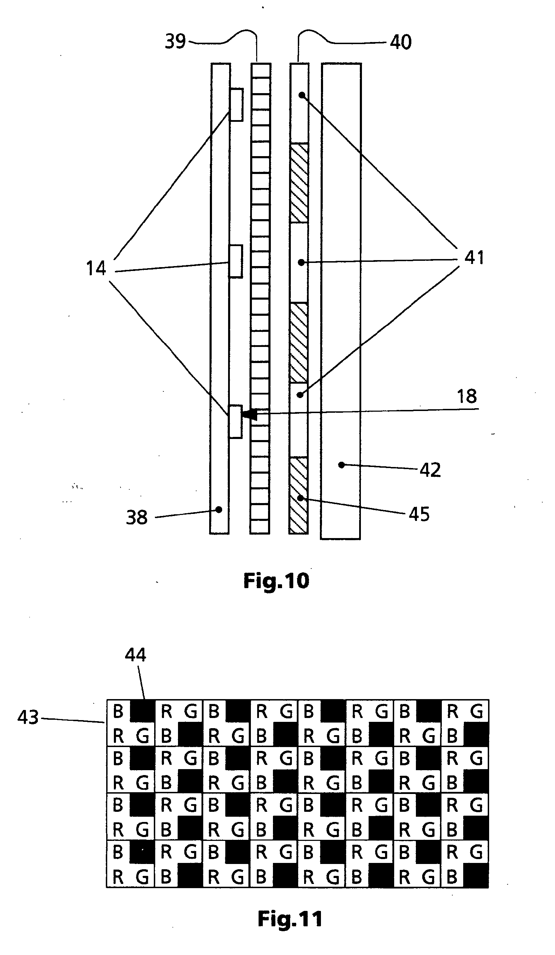

Fig. 10 shows a further configuration of the assembly with a camera plate and a display plate. An epoxy or glass board 38 carries a number of camera cells 14 in form of CCD elements. In front of the plate 38 an optical guide sheet 39 is arranged. Optical guide sheet 39 may include all possible elements necessary for appropriate focusing of light from the object to be picked-up onto the camera cells 14. Sheet 39 may represent the micro lenses 34 of Fig. 9 for focusing purposes as well as light emitting sheet 24 of Fig. 7 in the display mode. Sheet 39 is made of a polymeric material having both translucent and light emitting properties. In front of sheet 39 a light transmission layer 40 is arranged including translucent areas 41 in front of camera cells 14 for enabling passage of light from the object to camera cells 14. In front of transmission layer 40 an LCD-matrix 42 is provided having translucent cells in front of camera cells 14. The hatched areas 45 in layer 40 are not transparent. These are regions, which can be left black on the glass board 38, as there are no camera cells 14 on this position.

In a variant of the embodiment shown in Fig. 10, a sheet of light emitting elements replaces the LCD-matrix 42, e.g. light emitting diodes (LEDs). In this case layer 40 with its non-transparent regions 45 plays the role of a mask preventing light from impinging on the camera cells 14. Without masking the camera cells 14 would be overloaded.

Fig. 11 is a front view of the screen with a pattern of color dots, which may be used both as camera plate and as display plate. Each pixel 43 includes three dots for primary colors R, G, B and a transparent pitch or dot 44 for allowing the passage of light as described in connection with the previous pictures.

Any of the embodiments of the invention described above can also be provided with touch sensors increasing the versatility of the invention even more.

## Claims

1. Image pick-up and display apparatus comprising optical pick-up means and display means respectively associated with light sensitive elements defining a light sensitive pick-up area and with light emitting elements defining a display area
**characterized in that**
either elements (13, 14) are arranged within an active area of the display means in such a way that both the pick-up area (1) and the display area (2) substantially occupy the entire active area.

2. Apparatus according to claim 1, **characterized in that** in form of a spatial multiplexing a first group of pixels of the active area is associated with the pick-up area (1) and a second group of pixels of the active area is associated with the display area (2).

3. Apparatus according to claim 1, **characterized in that** the pixels of the active area are alternately associated either with the pick-up area (1) or with the display area (2) by way of time multiplexing.

4. Apparatus according to claim 1, **characterized in that** the pick-up area (1) and the display area (2) are included in two separated plates (6, 7) arranged parallel to each other.

5. Apparatus according to claim 4, **characterized in that** the plate (6) comprising the pick-up area is arranged behind the plate (7) comprising the display area relative to the object (12) to be picked-up.

6. Apparatus according to claim 4, **characterized in that** one of the plates (6, 7) includes translucent elements permitting the passage of incident light through said plate (6, 7) to the other plate (7, 6).

7. Apparatus according to claim 4, **characterized in that** one of the plates (15) is mounted to be displaceable with respect to the other plate.

8. Apparatus according to claim 1, **characterized in that** the light sensitive elements (14) and the light emitting elements (13) are arranged side by side within a single plate.

9. Apparatus according to claim 8, **characterized in that** the light sensitive elements (14) and the light emitting elements (13) are arranged in an interspersed form on the single plate.

10. Apparatus according to claim 4, **characterized in that** additionally to the light sensitive elements and the light emitting elements translucent or diffusive elements are arranged in the plate interspersed between said light sensitive and said light translucent elements.

11. Apparatus according to claim 4, **characterized in that** a light emitting sheet (17) is arranged between the two plates (6, 7).

12. Apparatus according to claim 11 **characterized in that** the light emitting sheet (17) is supplied at its border with light from a light source (20) and emitting backlight to the plate with the display area and **in that** the light emitting sheet (17) is arranged to be deformable between a flat and curved shape.

13. Apparatus according to claim 4, **characterized in that** a color filter sheet (22) is positioned between the two plates (6, 7) having elements transmitting only light of one of the primary colors (R, G, B) so that light passing through one element is directed to a camera or display cell adapted only for said primary color.

14. Apparatus according to claim 1, **characterized in that** masking cells (25) are positioned between the pick-up area (6) and the display area (7) wherein the masking cells are not transparent during display mode for preventing light for display impinges on the camera cells.

15. Apparatus according to claim 1, **characterized in that** that a microlense (34) is provided in front of each light sensitive element (14) for focusing incident light on to said element.
